# EUROPEAN PATENT APPLICATION

(11) **EP 2 006 855 A2**
(43) Date of publication of application: **24.12.2008**
(21) Application number: 07739826.1
(22) Date of filing: 27.03.2007
(51) Int. Cl.: G11B 27/00, G11B 27/34, H04N 5/91, H04N 5/93

(54) **PROGRAM REPRODUCING DEVICE AND PROGRAM**

(30) Priority: 31.03.2006 JP 2006098826
(71) Applicant: Panasonic Corporation, Kadoma-shi Osaka 571-8501 (JP)
(72) Inventor: YAMANISHI, Kazuhiro, c/o Panasonic Corp., IPROC, Chuo-ku, Osaka-shi, Osaka 540-6207 (JP)
(74) Representative: Ehlers, Jochen
(86) International application number: PCT/JP2007/056388
(87) International publication number: WO 2007/116735

(57) **Abstract**

A program reproducing device has: a receiving unit (12) that receives a reproduction instruction of program data stored in a program storage unit; a reproducing unit (14) that reproduces the program data to which reproduction is instructed through the receiving unit; a reproduction completion judging unit (15) that judges whether a specified rate of the program data or more has been already reproduced or not by the reproducing unit, for the program data stored in the program storage unit; and a reproduction information setting unit (16) that sets reproduction information showing whether the program data has been already reproduced or not, according to the judging result of the reproduction completion judging unit. Thus, the device can manage reproduction condition in a manner suited to a sense of a user.

## Description

### Technical Field

The present invention relates to a program reproducing device for reproducing a program recorded in a recording medium, and more particularly to a management method of reproduction status of the recorded program.

### Background Art

A program reproducing device such as DVD recorder is an appliance for recording a received program in a built-in recording medium, and reproducing the recorded program. Hitherto, in such program reproducing device, various technologies have been proposed for managing the reproduction of recorded programs efficiently, and understanding the reproduction status easily. For example, a program reproducing device has been proposed, in which a first information relating to a recorded program is displayed, and a second information including information about a first time region reproduced at specified speed in a time region relating to recorded program, and information about a second time region reproduced at a speed different from the specified speed is displayed to overlap with the first information (see patent document 1). In patent document 1, for example, the background color of the title area of a recorded program list display is changed in color only in the region corresponding to the reproduced portion.

In other conventional program reproducing device, recording date of the program, title of the program, viewing state of the program, channel, and recording time are managed in every program. The viewing state is managed depending on whether "Already reproduced" or "Not reproduced". When the viewing state is not reproduced, when the recorded program list is displayed, such recorded program is indicated as Not reproduced. In this case, if the recorded program is not reproduced at all after being recorded, in the recorded program list, the program is indicated as Not reproduced, but if partly reproduced, it is not indicated as Not reproduced.

Further, in the case of a program reproducing device of a large recording capacity, hitherto, when displaying a list of program titles recorded in the program reproducing device, a list of many titles is displayed, and it is not easy to read for the user. In particular, when viewing the daily or weekly recorded programs in batch, the titles must be selected individually, and the user's handling is complicated. Such problem is solved in patent document 2. In patent document 2, the title information of the programs recorded in the recording medium is retrieved, and a title list collecting programs of the same title is compiled, and programs having the same title can be reproduced continuously.
Patent document 1: JP-A-2004-147303 (page 1, Fig. 1, etc.)
Patent document 2: JP-A-2004-133984 (page 1, Fig. 1, etc.)

### Disclosure of Invention

### Problems to be Solved by the Invention

In the conventional program reproducing device, the viewing state of the recorded programs is managed depending on whether not reproduced or already reproduced, and it is not managed according to the sense of the user.

That is, in the conventional program reproducing device, a wide management region (disk recording capacity) was needed to manage very specifically about the reproduction status of programs. Hence, in the program reproducing device for storing and reproducing programs, the essential memory region was not utilized effectively. Besides, for the purpose of very specific display of reproduction status, a display device of high performance is needed in display of reproduction status, and the CPU load is increased.

In the second conventional program reproducing device, in list display of recorded programs, whether reproduced partly or reproduced completely, it is not indicated as Not reproduced. The user cannot judge whether the program has been completely viewed or not by referring to the list display of recorded programs, and it was far from the sense of use of the user.

Further, in the program reproducing device in patent document 2, when the programs having the same title, or titles of series programs are displayed in batch, the viewing state of programs is not displayed.

The invention is intended to solve the problems, and it is hence an object thereof to present a program reproducing device which easily manages viewing state of recorded programs and realizes management matched with the sense of the user.

### Means to Solve the Problems

A first aspect of the invention relates to a program reproducing device including a program storage unit for storing program data, a receiving unit for receiving a reproduction instruction of program data stored in the program storage unit, a reproducing unit for reproducing the program data to which reproduction is instructed through the receiving unit, a reproduction completion judging unit for judging whether equal to or more than a specified rate of the program data has been already reproduced or not by the reproducing unit, for the program data stored in the program storage unit, and a reproduction information setting unit for setting reproduction information showing whether the program data has been already reproduced or not, according to the judging result of the reproduction completion judging unit.

According to such configuration, when managing whether reproduced already or not, the management is easy, and management suited to the sense of the user is realized.

In the program reproducing device, the receiving unit may further include a title information retrieving unit for retrieving title information including the title of the program data and reproduction information related to the program data from the program storage unit when the receiving unit receives an output instruction of program title, and a title information output unit for issuing the title information retrieved by the title information retrieving unit.

A second aspect of the invention relates to a program reproducing device including a program storage unit for storing program data having an attribute value including program title and reproduction information showing whether the program has been already reproduced or not, a receiving unit for receiving a title output instruction for issuing the program title, a title retrieving unit for judging whether plural titles satisfy a specified condition or not when the receiving unit receives the title output instruction, composing a summary title as one title relating to the plural titles satisfying the specified condition, and acquiring a title not satisfying the specified condition, and a title information output unit for issuing title information including the title acquired by the title retrieving unit and the reproduction information of the program corresponding to the acquired title, acquiring reproduction information of plural programs corresponding to the summary title, determining the reproduction information corresponding to the summary title by using the reproduction information of plural programs, and issuing the title information including the summary title and the determined reproduction information.

According to such configuration, management of already-reproduced state or not-reproduced state of program group corresponding to the summary title is realized.

In the program reproducing device of the second aspect, the title information output unit may output title information having the title retrieved by the title retrieving unit and reproduction information of the program corresponding to the title, and may set the reproduction information corresponding to the summary title to the value showing already-reproduced state only when all pieces of the reproduction information of plural programs corresponding to the summary title shows already-reproduced state.

Further, the title information output unit may output title information including the title retrieved by the title retrieving unit and reproduction information of the program corresponding to the title, and set the reproduction information corresponding to the summary title to the value showing not-reproduced state when at least one piece of information shows not-reproduced state out of reproduction information of plural programs corresponding to the summary title.

In the program reproducing device of the second aspect, the title information output unit may output a rate of number of programs having reproduction information showing already-reproduced state, to the total number, for the plural programs relating to the summary title, in a visually recognizable manner, as the reproduction information corresponding to the summary title.

According to such configuration, management of already-reproduced state or not-reproduced state of program group corresponding to the summary title is realized, and it is possible to present the status effectively to the user.

The program reproducing device of the second aspect may further include a reproducing unit for reproducing the program data to which reproduction is instructed through the receiving unit, a reproduction completion judging unit for judging whether equal to or more than a specified rate of the program data has been already reproduced or not by the reproducing unit, for the program data stored in the program storage unit, and a reproduction information setting unit for setting reproduction information showing whether the program data has been already reproduced or not, according to the judging result of the reproduction completion judging unit.

According to such configuration, when managing whether reproduced already or not in the summary title, the management is easy, and management suited to the sense of the user is realized.

The program reproducing device of the first or second aspect may further include a recording unit for recording programs. Herein, the program storage unit may store the program recorded by the recording unit.

According to such configuration, whether reproduced already or not may be managed according to the sense of the user in the program storing apparatus having the program recording function.

Further, the reproduction completion judging unit may judge whether a rate of the time of the program actually reproduced to total reproduction time of the program is equal to or more than a specified value.

According to such configuration, when managing whether reproduced already or not, the management is easy, and management suited to the sense of the user is realized.

### Effects of the Invention

According to the program reproducing device of the invention, relating to the reproduction status of recorded programs, it can be easily managed whether the program has been already reproduced or not, and management suited to the sense of the user is realized.

### Brief Description of Drawings

Fig. 1 is a block diagram of a program reproducing device in embodiment 1 of the invention.
Fig. 2 is a flowchart of operation of the program reproducing device in embodiment 1.
Fig. 3 is a flowchart of reproduced information setting process of the program reproducing device in embodiment 1.
Fig. 4 is a flowchart of other example of reproduced information setting process.
Fig. 5 is a diagram showing a program management table.
Fig. 6 is a diagram showing an output example of title information.
Fig. 7 is a diagram showing a program management table.
Fig. 8 is a block diagram of a program reproducing device in embodiment 2 of the invention.
Fig. 9 is a flowchart of operation of the program reproducing device in embodiment 2.
Fig. 10A is a flowchart of title information output process of the program reproducing device in embodiment 2.
Fig. 10B is a flowchart of title information output process of the program reproducing device in embodiment 2 (continued from Fig. 10A).
Fig. 11 is a diagram showing a program management table.
Fig. 12 is a diagram showing a sorted program management table.
Fig. 13 is a diagram showing a sorted program management table.
Fig. 14 is a diagram showing an output example of title information.
Fig. 15 is a diagram showing an output example of title information.

### Description of Reference Numerals

- 1, 1b: Program reproducing device
- 3: Remote controller
- 5: Display
- 7: Speaker
- 11: Program storage unit
- 12: Receiving unit
- 13: Recording unit
- 14: Reproducing unit
- 15: Reproduction completion judging unit
- 16: Reproduction information setting unit
- 17, 82: Title information output unit
- 31, 31b: Program management table
- 81: Title retrieving unit

### Best Mode for Carrying Out the Invention

Referring now to the accompanying drawings, preferred embodiments of the invention are specifically described below. Throughout the preferred embodiments, constituent elements identified with same reference numerals operate similarly, and repeated explanation may be omitted.

### (Embodiment 1)

The program reproducing device explained in this embodiment is supposed to determine that the program has been already reproduced if equal to or more than a specified rate (specified value or more to less than 100%) has been already reproduced when judging whether the stored program has been already reproduced or not.

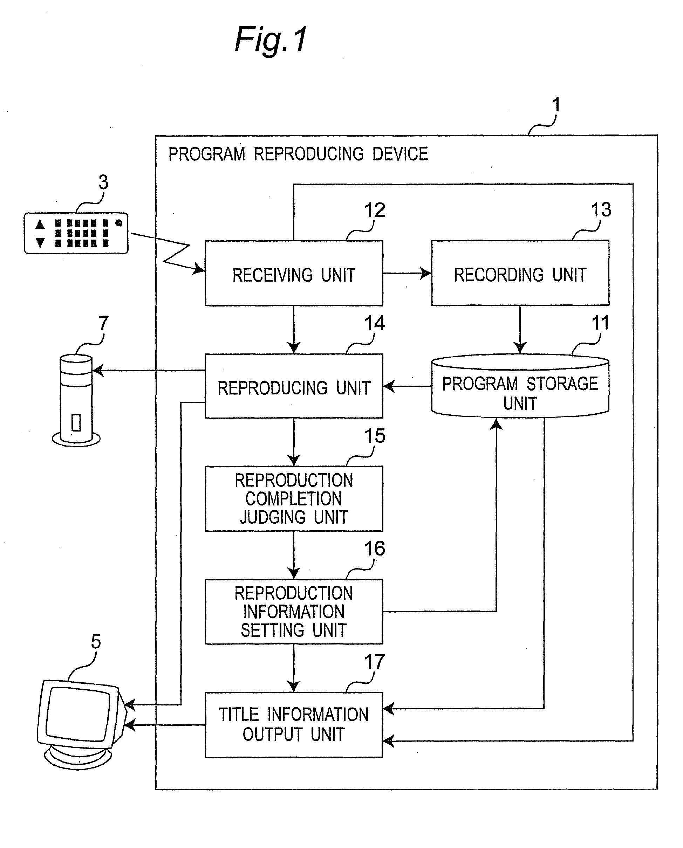

Fig. 1 is a block diagram of a program reproducing device in embodiment 1 of the invention.

The program reproducing device 1 includes a program storage unit 11, a receiving unit 12, a recording unit 13, a reproducing unit 14, a reproduction completion judging unit 15, a reproduction information setting unit 16, and a title information output unit 17.

The program storage unit 11 stores data of a program. The program is contents received from broadcast or communication. The program is usually contents having video and audio. However, the program may include video only, or may be contents of voice or music only. The program usually has attribute values such as title and reproduction information described below. The program storage unit 11 is preferably a nonvolatile recording medium, but a volatile recording medium may also be used. The program storage unit 11 is composed of, for example, hard disk and nonvolatile semiconductor memory.

The receiving unit 12 receives an instruction from the user. The instruction is, for example, an instruction (reproduction instruction) for reproduction of a program stored in the program storage unit 11. The instruction may also include a recording instruction for instructing recording of a program, a title output instruction for instructing output of a program title, a reproduction stop instruction for stopping reproduction, or a recording stop instruction for stopping recording. The instruction input means may be realized by a remote controller 3, buttons provided in the program reproducing device 1, numeric keys, keyboard, mouse, menu screen, or others. The receiving unit 12 can be realized by a device driver for input means such as the remote controller and keyboard, control software of menu screen, and others.

The recording unit 13 records a program in the program storage unit 11. The recording unit 13 records, for example, a program received by a tuner (not shown). The recording unit 13 also receives a program received communication. The recording unit 13 records a program in the program storage unit 11. Usually, when the receiving unit 12 receives a recording instruction, the recording unit 13 records the program corresponding to the recording instruction. The recording unit 13 can be usually composed of MPU or memory. The processing procedure of the recording unit 13 is usually realized by software, and the software is recorded in ROM or other recording medium. It may be also realized by hardware (exclusive circuit).

The reproducing unit 14 reproduces the program specified by the reproduction instruction received in the receiving unit 12. The reproduction instruction includes the information for specifying the program. The reproducing unit 14 usually reads out and outputs a program from the program storage unit 11. The reproducing unit 14 usually outputs video to the display 5, and outputs audio to the speaker 7. The reproducing unit 14 usually does not include the display 5 and speaker 7, but may include the display 5 and speaker 7. The reproducing unit 14 can be usually realized by MPU or memory. The processing procedure of the reproducing unit 14 is usually realized by software, and the software is recorded in ROM or other recording medium. The processing procedure of the reproducing unit 14 may also be realized by hardware (exclusive circuit).

The reproduction completion judging unit 15 judges whether the recorded program has been reproduced by equal to or more than a specified rate or not. More specifically, the reproduction completion judging unit 15 judges whether or not the rate of actually reproduced time (hereinafter, referred to as "already reproduced time") to the total reproduction time of the recorded program is equal to or more than a specified rate. The total reproduction time of the program is the time required to terminate the reproduction of the program. For example, supposing the specified rate to be 75%, if the total reproduction time of the program is 60 minutes, the reproduction completion judging unit 15 judges whether the program has been already reproduced by equal to or more than 45 minutes (that is, 75% of 60 minutes) or not. In this judgment, the reproduction completion judging unit 15 may judge if the rate of the reproduced time to the total reproduction time is larger than the specified rate or not. The reproduced time of same position in a same program is not added by two times or more.

The reproduced time of the program, that is, the already reproduced time is, for example, the duration of time reproduced by a single attempt. When judging if the program is reproduced for the time equal to or more than a specified rate or not, it may be judged on the basis of reproduction start point. For example, if a portion of the latter 15 minutes (that is, 75% of 60 minutes) in a program of 60 minutes is reproduced, it may be judged that the program has been reproduced by equal to or more than a specified rate. Such judging method is easy in process, and it is a merit that it is not required to store the previously reproduced position.

Meanwhile, if one program is partially reproduced plural times, it may be judged by the total of plural times of reproduction time. The specified time should not include, preferably, small rate such as 0% or 1%, and is preferred to be set usually at 50% or more to less than 100%. It is more preferably 75% or more to less than 100%, or further preferably 85% or more to less than 100%. The reproduction completion judging unit 15 is usually realized by MPU or memory. The processing procedure of the reproduction completion judging unit 15 is usually realized by software, and the software is recorded in ROM or other recording medium. The processing procedure of the reproduction completion judging unit 15 may also be realized by hardware (exclusive circuit).

The reproduction information setting unit 16 set the reproduction information in a program judged to be reproduced already by a specified rate or more by the reproduction completion judging unit 15. The reproduction information is the information showing whether or not each program has been already reproduced by a specified rate or more, and it is stored in the program storage unit 11 in relation to the program information. The reproduction information is "1" when the program is reproduced by a specified rate or more (already reproduced), and is "0" when not reproduced yet by a specified rate or more (not reproduced). The reproduction information is, for example, an attribute value of the program. The data structure of the reproduction information is not specified, and it is sufficient whether already reproduced or not reproduced can be distinguished. The reproduction information is not intended to distinguish only whether already reproduced or not reproduced, but may distinguish three or more states including an intermediately reproduced state. The reproduction information setting unit 16 is usually realized by MPU or memory. The processing procedure of the reproduction information setting unit 16 is usually realized by software, and the software is recorded in ROM or other recording medium. The processing procedure of the reproduction information setting unit 16 may also be realized by hardware (exclusive circuit).

The title information output unit 17 reads out and outputs title information from the program storage unit 11 when the receiving unit 12 receives a title output instruction. The title information includes the program title and the reproduction information relating to the program. The output format of title information is not specified. An output example of title information is described below. Herein, the output includes display to the display unit, print to the printer unit, and transmission to an external device (display device, etc.). The title information output unit 17 may or may not include output device such as display. The title information output unit 17 is realized by driver software of an output device, or driver software of an output device and the output device, or the like.

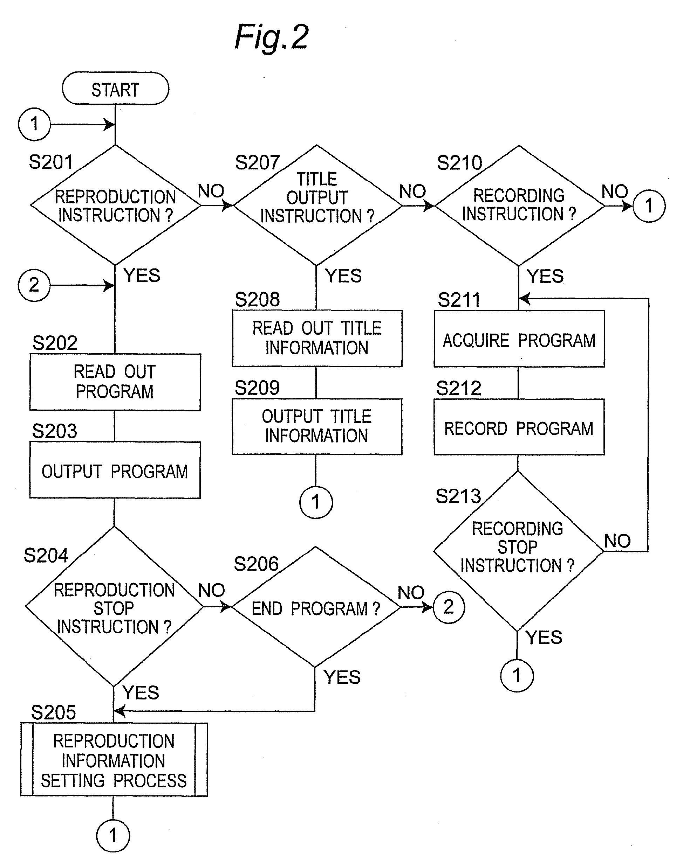

The operation of the program reproducing device 1 is explained below while referring to the flowcharts in Fig. 2 to Fig. 4.

(Step S201) The receiving unit 12 judges whether a reproduction instruction is received or not. If the reproduction instruction is received, the process goes to step S202, or if the reproduction instruction is not received, the process goes to step S207.

(Step S202) The reproducing unit 14 reads out programs instructed by the reproduction instruction sequentially from the program storage unit 11.

(Step S203) The reproducing unit 14 outputs the programs read out at step S202.

(Step S204) The receiving unit 12 judges whether a reproduction stop instruction is received or not. If the reproduction stop instruction is received, the process goes to step S205, or if the reproduction stop instruction is not received, the process goes to step S206.

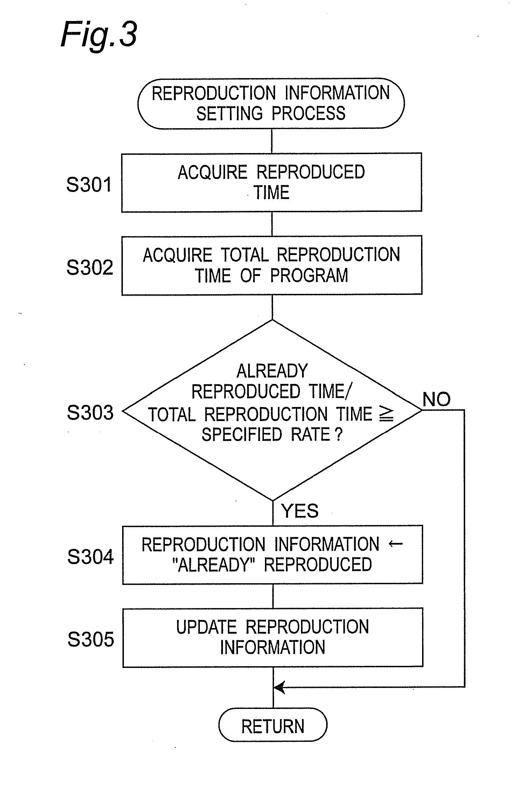

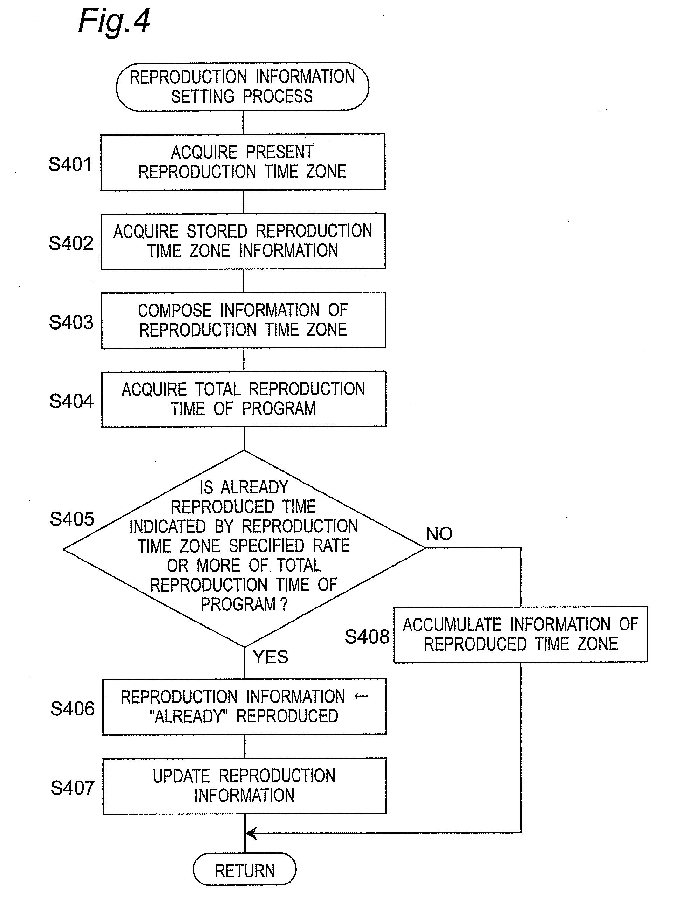

(Step S205) The reproduction completion judging unit 15 and the reproduction information setting unit 16 execute the reproduced information setting process as the process for setting the reproduction information, and return to step S201. The detail of reproduced information setting process is explained later by referring to the flowcharts in Fig. 3 and Fig. 4.

(Step S206) The reproducing unit 14 judges whether the program has been reproduced to the end or not. If the program has been reproduced to the end, the process goes to step S205, or if the program has not been reproduced to the end, the process returns to step S202.

(Step S207) The receiving unit 12 judges if the title output instruction is received or not. If the title output instruction is received, the process goes to step S208, or if the title output instruction is not received, the process goes to step S210.

(Step S208) The title information output unit 17 reads out the title information composed of attribute values of programs from the program storage unit 11.

(Step S209) The title information output unit 17 outputs the title information being read out at step S208. The process returns to step S201.

(Step S210) The receiving unit 12 judges whether a recording instruction is received or not. If the recording instruction is received, the process goes to step S211, or if the recording instruction is not received, the process returns to step S201.

(Step S211) The recording unit 13 acquires the program to be recorded. The program to be recorded is, for example, the program received in the tuner.

(Step S212) The recording unit 13 records the program acquired at step S211. The initial value of the reproduction information as attribute value of the recorded program is set at Not recorded value (for example, "0"). The program data and the program title are recorded together. The program title is acquired, for example, from the SI information of the electronic program guide.

(Step S213) The receiving unit 12 judges whether a recording stop instruction is received or not. If the recording stop instruction is received, the process returns to step S201, or if the recording stop instruction is not received, the process returns to step S211.

In the flowchart in Fig. 2, the output format of title information is not particularly specified. The source of acquisition of program title is not specified. In the flowchart in Fig. 2, the process is terminated when the power source is turned off or if interrupt for terminating of the process occurs.

A first example of reproduced information setting process at step S205 is explained by referring to the flowchart in Fig. 3.

(Step S301) The reproduction completion judging unit 15 acquires the actually reproduced time (already reproduced time) of the program by the reproducing unit 14 at the present process. The already reproduced time is equal to the output time of the program. The already reproduced time may include, in addition to the output time at normal speed, the output time in fast feed or other non-ordinary speed.

(Step S302) The reproduction completion judging unit 15 acquires the total reproduction time of the program to be reproduced. The total reproduction time of programs is usually available as attribute value of the program. For example, when the program has attribute values of on-air start time and on-air end time of the program, the reproduction completion judging unit 15 may calculate the total reproduction time of the program from the attributes values of on-air start time and on-air end time. The total reproduction time of a program is the time required for completing reproduction of the program, and in the case of 60-minute program, for example, it is 60 minutes. That is, when the on-air start time is 8:00 and the on-air end time is 8:24, the total reproduction time of this program is 24 minutes.

(Step S303) The reproduction completion judging unit 15 judges if "already reproduced time / total reproduction time of program ≥ specified rate" or not. If the condition of "already reproduced time / total reproduction time of program ≥ specified rate" is satisfied, the process goes to step S304, or if the condition of "already reproduced time / total reproduction time of program ≥ specified rate" is not satisfied, the process returns.

(Step S304) The reproduction completion judging unit 15 puts the value showing Already reproduced (for example, "1") in the variable "reproduction information".

(Step S305) The reproduction information setting unit 16 updates the reproduction information of the program by the value of variable "reproduction information" obtained a step S304, and returns.

In the flowchart in Fig. 3, for example, the specified rate is 75%, and in the case of 60-minute program, the reproduction completion judging unit 15 may judges that equal to or more than a specified rate is reproduced when a region of final 15 minutes is reproduced. When thus judged, the reproduction completion judging unit 15 sets the variable "reproduction information" to the value showing Already reproduced (for example, "1").

A second example of reproduced information providing process at step S205 is explained by referring to the flowchart in Fig. 4.

(Step S401) The reproduction completion judging unit 15 acquires the reproduction time zone in the present reproduction process. The reproduction time zone is the information showing the reproduced position (time zone) of program. The information of reproduction time zone is specified by the reproduction start position (time) and reproduction end position (time). For example, it is "0-35". By "0-35", it means that the program is reproduced from the position of first 0 minute to the position of 35 minutes. If the information of reproduction time zone is "40-55", it means that the program is reproduced from the position of 40 minutes to the position of 55 minutes.

(Step S402) The reproduction completion judging unit 15 acquires the information of reproduction time zone as the attribute of the reproduced program from the program storage unit 11.

(Step S403) The reproduction completion judging unit 15 composes the updated information of reproduction time zone of the program, from the information of reproduction time zone of the present reproduction process acquired at step S401, and the information of reproduction time zone as the attribute value of the program being read out at step S402. For example, when the information of reproduction time zone of the present reproduction process acquired at step S401 is "40-55", and the information of reproduction time zone as the attribute value of the program being read out at step S402 is "0-45", the reproduction completion judging unit 15 obtains "0-55" as logical sum OR of two values. That is, the program has been reproduced from the position of first 0 minute to the position of 55 minutes.

(Step S404) The reproduction completion judging unit 15 acquires the total reproduction time of the program to be reproduced (60 minutes in the case of 60-minute program).

(Step S405) The reproduction completion judging unit 15 judges if already reproduced time (55 minutes) indicated by the information of the reproduction time zone composed at step S403 (for example, "0-55") is a specified rate (for example, 85%) or more of total reproduction time (for example, 60 minutes) acquired at step S404 or not. If the specified rate or more, the process goes to step S406, or if not more than the specified rate, the process goes to step S408.

(Step S406) The reproduction completion judging unit 15 sets the variable "reproduction information" to the value showing Already reproduced (for example, "1").

(Step S407) The reproduction information setting unit 16 updates the reproduction information of the program by the value of variable "reproduction information" obtained at step S406, and returns.

(Step S408) The reproduction information setting unit 16 accumulates the information of reproduction time zone (for example, "0-55") composed at step S403 as the attribute value of the program, and returns.

In the flowchart in Fig. 4, step S407 may be followed by the process of step S408 before returning.

A specific operation of the program reproducing device 1 in the preferred embodiment is described below.

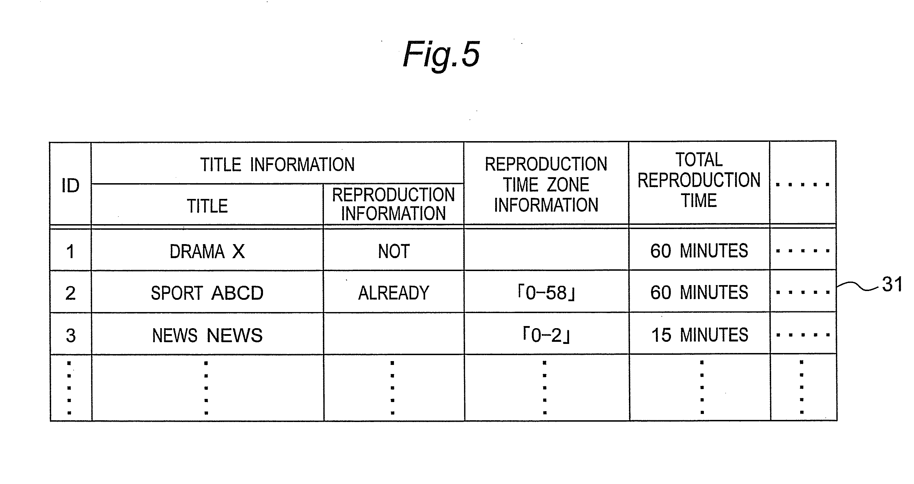

Fig. 5 is a diagram showing a composition of program management table held in the program storage unit 11. The program management table 31 is a table for managing the attribute values of the program stored in the program storage unit 11. The program management table 31 includes attributes of "ID", "title information", "reproduction time zone information", "total reproduction time", etc. The ID is the record identifying information, and is present for record management in the program management table 31. The title information includes the title and reproduction information. The reproduction time zone information is the information about the actually reproduced time zone of the program. When the reproduction time zone information is "0-58", it shows the program has been reproduced from the position of 0 minute to the position of 58 minutes. The total reproduction time is the time necessary for reproducing the program entirely. In Fig. 5, the attribute values of the reproduction information include "Not", "Already", and "(Empty)". "Not" means the program is not reproduced at all, "Already" means the program is reproduced by a specified rate or more, and "(Empty)" means neither Not nor Already. That is, "(Empty)" means that the program is somewhat reproduced but not more than specified rate. The values of reproduction information are, for example, "0", "1", Null, corresponding to the attributes of "Not", "Already", and "(Empty)".

Suppose the criterion of the reproduction completion judging unit 15 is the specified rate of 85%. The reproduction completion judging unit 15 holds the information of the threshold showing the specified rate.

In this configuration, for example, the user manipulates the remote controller 3 to instruct output of the title, and this title output instruction is received in the receiving unit 12.

Next, the title information output unit 17 reads out the title information (the program management table 31 in Fig. 5) which is the attribute value of each program from the program storage unit 11.

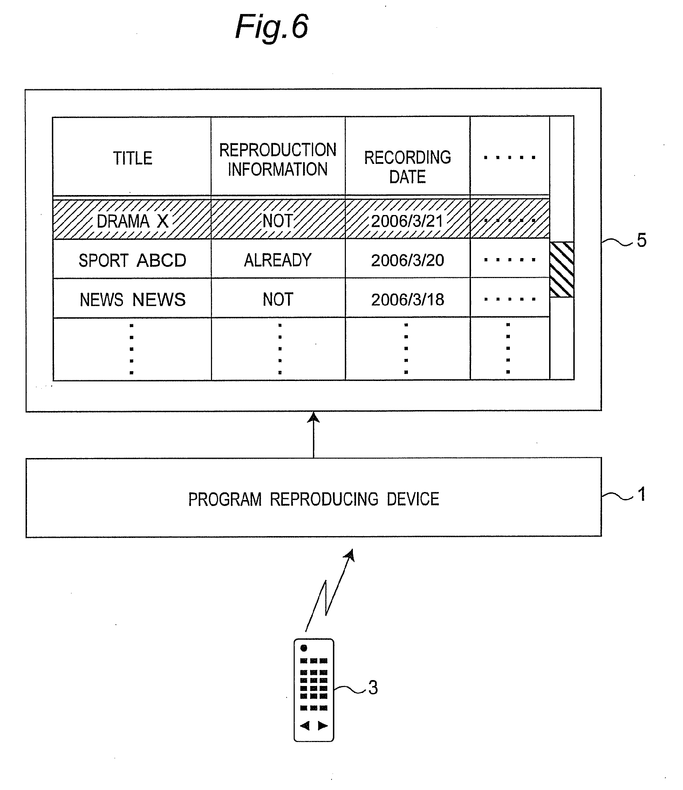

The title information output unit 17 outputs the obtained title information. An output example (display example) of title information is shown in Fig. 6.

In Fig. 6, the user has instructed reproduction of the program "drama X". In this case, for example, on the focused screen of the title of the program "drama X", the user presses the "Fix" button of the remote controller.

The receiving unit 12 receives the reproduction instruction from the user, and the reproducing unit 14 reads and reproduces the "drama X" specified by the reproduction instruction sequentially from the program storage unit 11.

For example, this drama X ends at 53 minutes, and is followed by commercial messages, and in 53 minutes from the start of program, the user instructs stop of reproduction by the remote controller, and the receiving unit 12 receives the reproduction stop instruction, and stops reproduction. As a result, the reproduction completion judging unit 15 acquires the "0-53" as the information of the present reproduction time.

The reproduction completion judging unit 15 then acquires the information of reproduction time zone as the attribute value of the reproduced program from the program storage unit 11. Herein, the attribute of program "drama X", reproduction time zone information, is Null (see Fig. 5), and the reproduction completion judging unit 15 set "0-53" as the reproduction time zone information.

Next, the reproduction completion judging unit 15 obtains the total time (here, 60 minutes) of program "drama X".

Further, the reproduction completion judging unit 15 judges if the condition "53 minutes/ 60 minutes ≥ specified rate 85%" is satisfied or not. The condition "53 minutes/ 60 minutes ≥ specified rate 85%" is true, and the reproduction completion judging unit 15 sets the attribute "reproduction information" of program "drama X" to "Already reproduced". The reproduction information setting unit 16 updates the reproduction information of program "drama X" by the value showing Already reproduced (for example, "1").

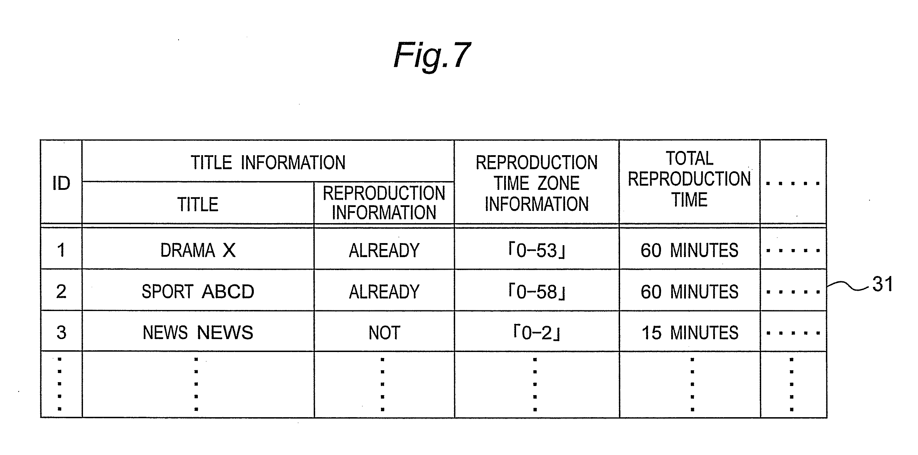

As a result of this process, the program management table 31 is updated as shown in Fig. 7. The reproduction completion judging unit 15 may also updates the reproduction time zone information of "drama X" by "0-53".

According to the preferred embodiment, in the management of Already reproduced and Not reproduced of the recorded program, management suited to the sense of the user is realized. That is, by setting the program to a state of Already reproduced, instead of totally reproduced state, the reproduction information can be managed according to the sense of the user.

In the preferred embodiment, in the program management table 31, the reproduction time zone information may not be managed. Without reproduction time zone information, Already reproduced or Not reproduced of program can be managed, and the memory region may be utilized effectively.

In the preferred embodiment, the specified rate is not limited to 75% or 85%, but may be other percentage.

In the preferred embodiment, the reproduction information set and provided by the reproduction information setting unit 16 is utilized only in title output. However, the reproduction information may be utilized for other applications. For example, when displaying the title, the reproduction information may be utilized for displaying from the title of a program not reproduced. The reproduction information may also be effectively used in management of copyrights to prohibit second viewing of an already reproduced program.

In a specific example of the embodiment, the attributes of reproduction information can be assigned with three kinds of values of "Not", "Already" and "(Empty)", but "Empty" and "Not" may be categorized together. This is the same in other embodiments.

The process in the embodiment may be realized by software. The software may be distributed by downloading. The software may be also recorded in CD-ROM or other recording medium, and distributed. This is the same in other embodiments in this specification.

The software for realizing the function of the program reproducing device of the preferred embodiment is the following program. That is, the program causes the computer to execute the following steps:
- a receiving step of receiving a reproduction instruction of program data stored in a program storage unit,
- a reproducing step of reproducing the program data to which reproduction is instructed through the receiving step,
- a reproduction judging step of judging whether equal to or more than a specified rate of the program data has been already reproduced or not at the reproducing step, for the program data stored in the program storage unit, and
- a reproduction information setting step of setting reproduction information showing whether the program data has been already reproduced or not, according to the judging result at the reproduction judging step.

This program may also cause the computer to execute a title information retrieving step of retrieving title information including the title of the program data and reproduction information related to the program data from the program storage unit when the receiving step receives an output instruction of program title, and a title information output step of issuing the title information retrieved at the title information retrieving step.

In the program, preferably, a recording step of recording a program is further executed, and the program is the program recorded at the recording step.

In the reproduction judging step of the program, it is preferred to judge whether the program is reproduced by the time of equal to or more than a specified or not, to the total reproduction time.

Thus, in the program restoring device of the preferred embodiment, in management of reproduction status of a recorded program, a program already reproduced by equal to or more than a specified rate is managed as being already reproduced. Accordingly, even if the program is reproduced by more than a majority and is not reproduced completely, the program is handled as being already reproduced, and the reproduction status can be managed in the sense closer to the feeling of the user.

### (Embodiment 2)

In this preferred embodiment, titles of plural programs are collectively called as one title (hereinafter, referred to as "summary title"), and a program reproducing device manages the reproduction status of Already reproduced or Not reproduced in the programs relating to the summary title, and this program reproducing device is explained.

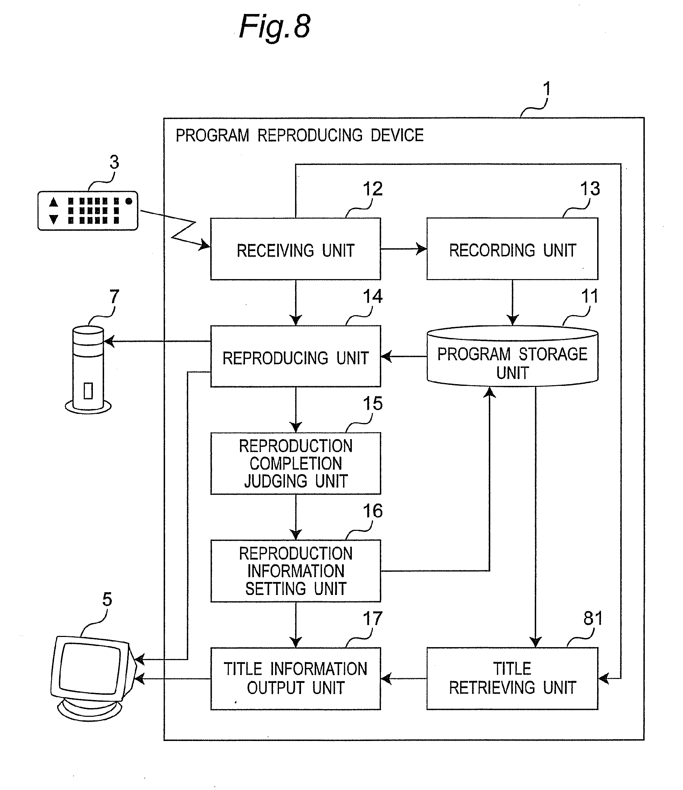

Fig. 8 is a block diagram of the program reproducing device of this preferred embodiment.

The program reproducing device 1b of the preferred embodiment has a title retrieving unit 81 in addition of the configuration of embodiment 1.

The title retrieving unit 81 judges if each title satisfies the specified condition when the receiving unit 12 receives a title output instruction, and compiles a summary title from titles of the programs satisfying the specified condition, and acquires titles failing to satisfy the specified condition. The specified condition is, for example, that titles are identical in all characters or in equal to or more than a specified number of characters, among titles of plural programs. In this case, the title retrieving unit 81 generates one summary title from plural titles having same characters each other in all characters or in equal to or more than a specified number of characters. The summary title is set in a representative title among plural titles (for example, in title of the program of the latest recording date). Or, the summary title is first ten characters among common titles, or a common character string or the like among titles. The titles failing to satisfy the specified condition are, for example, unique titles not having common title name, and these titles are not displayed collectively. The title retrieving unit 81 is usually composed of MPU or memory. The processing procedure of the title retrieving unit 81 is usually realized by software, and the software is recorded in ROM or other recording medium. It may also be realized by hardware (exclusive circuit).

The title information output unit 82 outputs the title information. The title information includes the title acquired by the title retrieving unit 81, and the reproduction information of the program corresponding to the title. The title information output unit 82 also outputs the title information including the summary title acquired by the title retrieving unit 81 and the reproduction information corresponding to the summary title. The reproduction information corresponding to the summary title is determined from the reproduction information of two or more programs corresponding to the summary title.

More specifically, the title information output unit 82 outputs, for example, the title information including the title retrieved by the title retrieving unit 81 and the reproduction information of the program corresponding to the title, and only when all reproduction information of the plural programs corresponding to the summary title is "Already (Already reproduced)", the reproduction information of the programs corresponding to the summary title may be set as "Already". In this case, the title information output unit 82 outputs the reproduction information corresponding to the summary title as "Already" only when all programs corresponding to the plural titles satisfying the specified condition are "Already".

The title information output unit 82 outputs, for example, the title information including the title retrieved by the title retrieving unit 81 and the reproduction information of the program corresponding to the title. The title information output unit 82 may output the reproduction information corresponding to the summary title as "Not" when at least one piece of information is "Not" (Not reproduced) out of the reproduction information of plural programs corresponding to the summary title. In such a case, the title information output unit 82 outputs the reproduction information corresponding to the summary title as "Not" when the reproduction information corresponding to at least one program is "Not" out of the programs corresponding to the plural titles satisfying the specified condition.

The title information output unit 82 may also output the reproduction information corresponding to the summary title in a form of visually showing the rate of "Already" to the reproduction information of programs corresponding to the summary title. For example, supposing there are 12 programs corresponding to the summary title, if 8 programs are Already and 4 programs are Not, the title information output unit 82 may output "8/12" as reproduction information. The output is a concept including display to the display unit, print to the printer unit, and transmission to the external device, and the like. The title information output unit 82 can be realized by driver software of an output device, or driver software of an output device and the output device, or the like. The title information output unit 82 may include an output device such as the display unit and others.

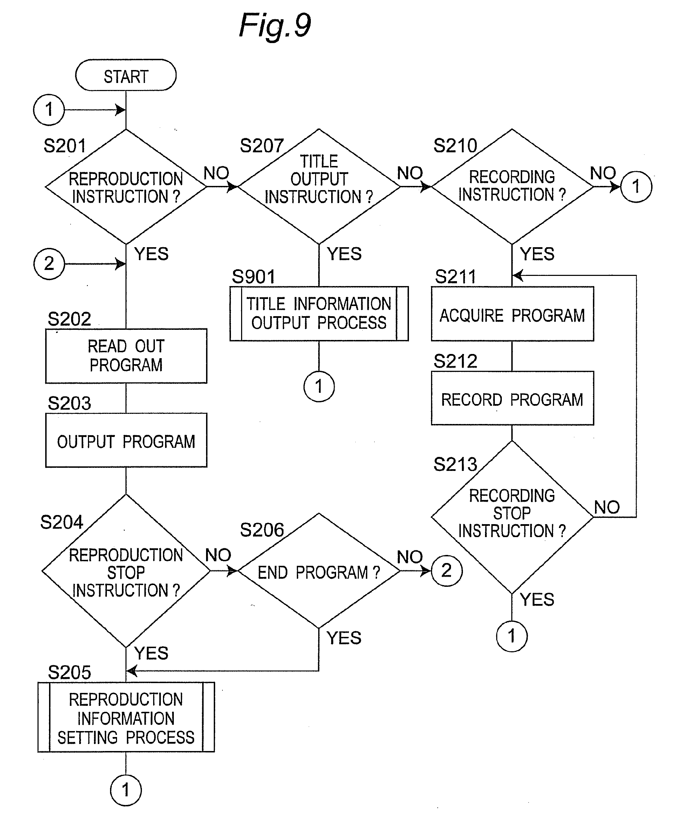

The operation of the program reproducing device 1b is explained by referring to the flowchart in Fig. 9. In step S901, the flowchart in Fig. 9 is different from the flowchart in Fig. 2 of embodiment 1, and only step S901 is specifically described below. At step S901, the title retrieving unit 81 and the title information output unit 82 execute the title information output process for issuing the title information.

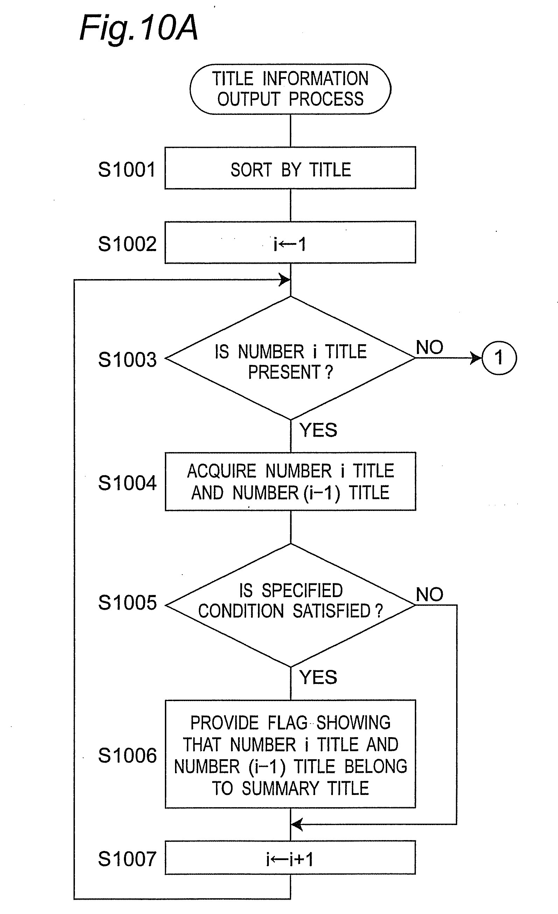

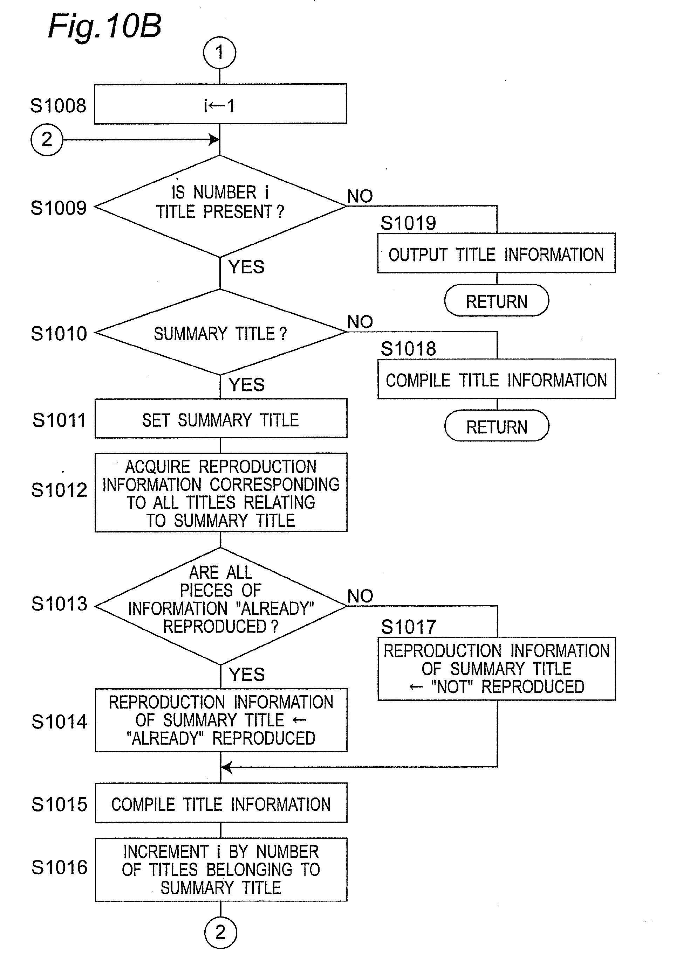

Referring to the flowchart in Fig. 10A and Fig. 10B, the detail of title information output process at step S901 is described.

(Step S1001) The title retrieving unit 81 sorts the attribute group (for example, the record of the program management table) of programs of the program storage unit 11, by the title.

(Step S1002) The title retrieving unit 81 puts "1" as initial value in counter i.

(Step S1003) The title retrieving unit 81 judges if number i title is present or not in the titles sorted at step S1001. If number i title is present, the process goes to step S1004, and if number i title is not present, the process goes to step S1008 (see Fig. 10B).

(Step S1004) The title retrieving unit 81 acquires number i title and number i-1 title. In the case of i = 1, number i-1 title is Null.

(Step S1005) The title retrieving unit 81 judges if number i title and number i-1 title acquired at step S1004 satisfy the specified condition or not. If the specified condition is satisfied, the process goes to step S1006, and if the specified condition is not satisfied, the process goes to step S1007.

(Step S1006) The title retrieving unit 81 provides number i title with a flag showing that number i title and number i-1 title satisfying the specified condition belong to the summary title.

(Step S1007) The title retrieving unit 81 increments counter i by 1, and returns to step S1003.

(Step S1008) (See Fig. 10B.) The title retrieving unit 81 puts "1" in counter i.

(Step S1009) The title retrieving unit 81 judges if number i title is present or not among the titles sorted at step S1001. If number i title is present, the process goes to step S1010, or if number i title is not present, the process goes to step S1019.

(Step S1010) The title retrieving unit 81 judges if number i title is provided with a flag of summary title or not. If number i title is provided with a summary title flag, the process goes to step S1011, or if not provided with summary title flag, the process goes to step S1018.

(Step S1011) The title retrieving unit 81 sets a summary title on continuous plural titles provided with summary title flag. A group of continuous plural titles provided with summary title flag is managed as the title group belonging to one summary title. In this case, the title retrieving unit 81 may determine the name of the title of the latest recording date as the summary title out of the continuous plural titles provided with summary title flag, or determine the character string common to the continuous plural titles provided with summary title flag as summary title. The naming method of summary title is not specified.

(Step S1012) The title information output unit 82 reads out the reproduction information corresponding to continuous plural titles provided with summary title flag from the program storage unit 11.

(Step S1013) The title information output unit 82 judges if all reproduction information acquired at step S1012 indicates "Already" or not. If all is "Already", the process goes to step S1014, and if any one is not "Already", the process goes to step S1017.

(Step S1014) The title information output unit 82 sets the reproduction information of summary title to "Already".

(Step S1015) The title information output unit 82 compiles the title information to be outputted. The title information includes the summary title and reproduction information.

(Step S1016) The title information output unit 82 increments i by the number of titles for composing the summary title, and returns to step S1009.

(Step S1017) The title information output unit 82 sets the reproduction information of summary title to "Not", and goes to step S1015.

(Step S1018) The title information output unit 82 acquires at least one title (not summary title) and reproduction information, and compiles title information, and returns to step S1009.

(Step S1019) The title information output unit 82 outputs the title information compiled at step S1015 or step S1018 to the display 5 or the like.

A specific operation of the program reproducing device in the preferred embodiment is described below.

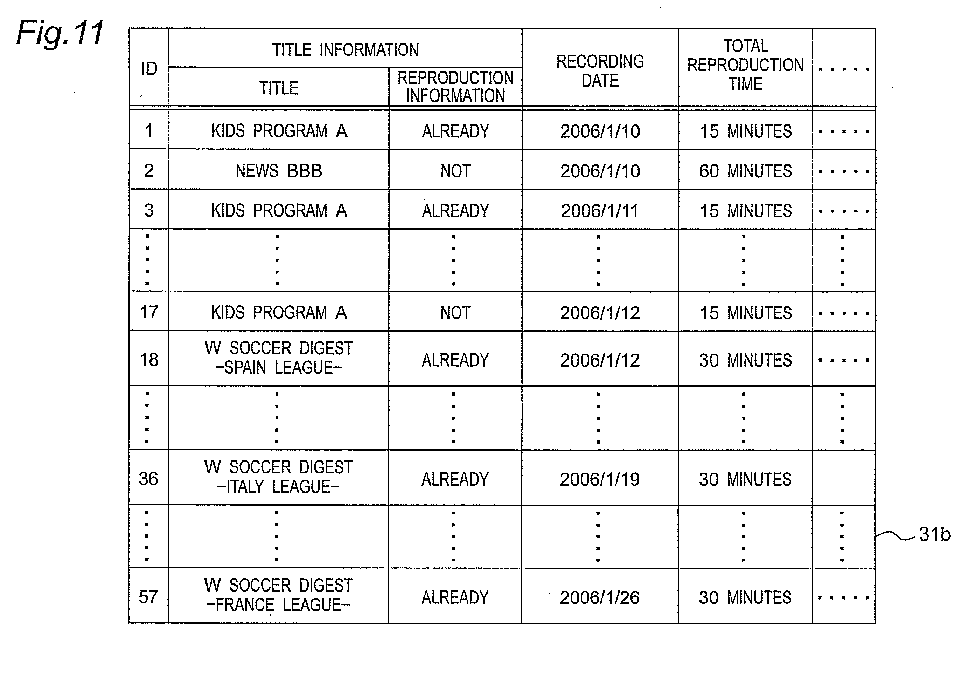

Fig. 11 shows a program management table held in the program storage unit 11. The program management table 31b includes attributes of "ID", "title information", "recording date", "total reproduction time", etc. The "recording date" is the information showing the date when the program was recorded.

The reproduction completion judging unit 15 judges that the program is reproduced when reproduced by equal to or more than a specified rate (75% in this example) at ordinary speed (standard speed) to the total reproduction time of the program. The reproduction completion judging unit 15 holds the information of threshold 75% to the specified rate.

In this situation, suppose that the user instructs the title output by the remote controller 3, and that the receiving unit 12 receives the title output instruction.

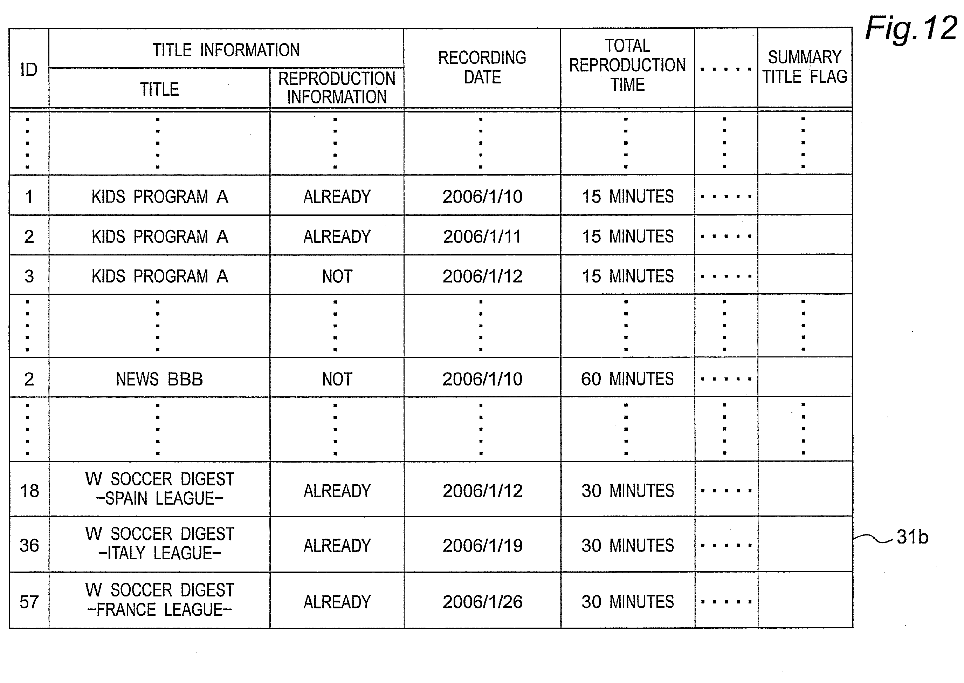

The title retrieving unit 81 sorts the attribute group (the record of the program management table 31b in Fig. 11) of programs of the program storage unit 11, by the title. As a result, the title retrieving unit 81 obtains the sorted program management table 31b shown in Fig. 12. The sort processing is a known art, and explanation is omitted.

Herein, the specified condition for compiling the summary title is supposed that at least first ten characters of the title are a same character string. The summary title is composed of a common character string (a character string from first character up to before a different character).

In the following condition, the title retrieving unit 81 reads out sequentially from the first title, and judges if the first title and second title satisfy the specified condition or not. When the specified condition is satisfied, "1" is put in the flag showing the summary title (hereinafter, referred to as "summary title flag") (flag is ON). If the specified condition fails to be satisfied, the value of the summary title flag is unchanged (Null or "0").

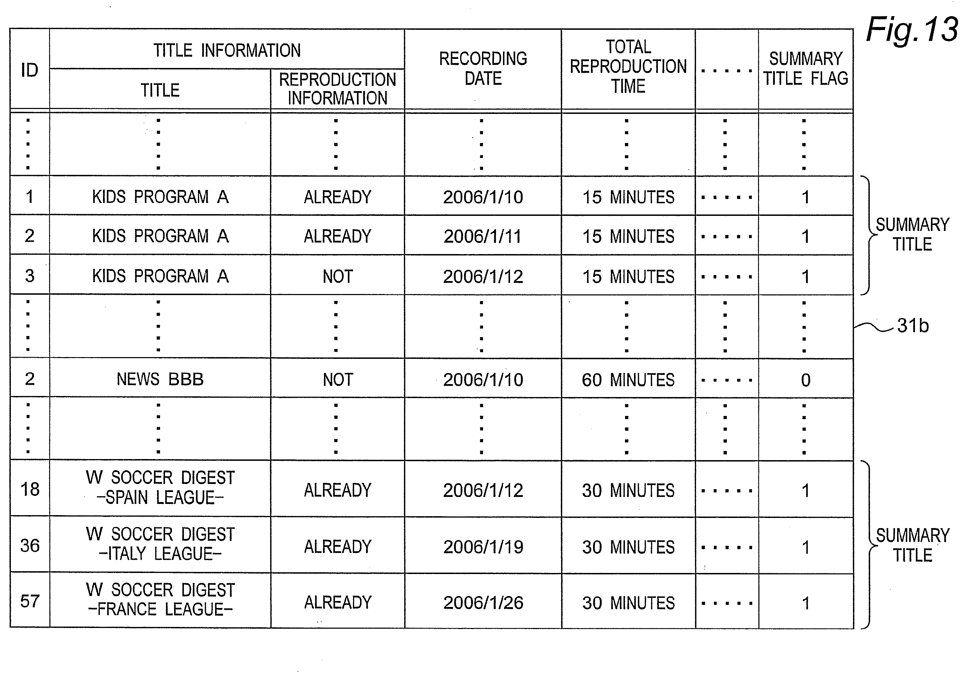

In the example in Fig. 13, the titles of which ID is 1, 3, and 17 are identical in character string, and the title retrieving unit 81 sets "1" in the value of summary title flag of these titles. Further, in Fig. 13, the titles of which ID is 18, 36, and 57 are identical in the first ten characters, and the title retrieving unit 81 sets "1" in the value of summary title flag of these titles.

Next, the title retrieving unit 81 compiles a summary title from plural tiles provided with summary title flag. For example, in Fig. 13, from titles of which ID is 1, 3, 17, a summary title of "kids program A" is acquired. The title information output unit 82 reads out all pieces of reproduction information of which ID is 1, 3, and 17. In the reproduction information of which ID is 1, 3, and 17, there is one piece of information showing "Not", the reproduction information of summary title corresponding to ID of 1, 3, and 17 is set to "Not" (for example, "0"). In this example, if any one piece of the reproduction information of programs corresponding to the summary title is "Not", the reproduction information of summary title information is set to "Not".

The title information output unit 82 compiles the title information (for example, "G, kids program A, Not reproduced") from the summary title "kids program A" and reproduction information "Not". Herein, the title information "G" shows summary information.

In Fig. 13, the title of which ID is 2 is not summary title, and the title retrieving unit 81 acquires "News BBB" directly as title. The title information output unit 82 compiles title information (for example, ", News BBB, Not reproduced") form the title "News BBB" and reproduction information "Not". Since "News BBB" is not summary title, "G" is not included.

Then, the title retrieving unit 81 compiles the summary tile "W Soccer Digest" from titles of ID of 18, 36, and 57 similarly as mentioned above. The title retrieving unit 81 retrieves a character string same in titles of ID of 18, 36, and 57, and sets the summary title to the character string.

The title information output unit 82 reads out all reproduction information of ID of 18, 36, and 57 in Fig. 13. The title information output unit 82 sets the reproduction information of summary title corresponding to ID of 18, 36, and 57 to "Already" (for example, "1") because all reproduction information of ID of 18, 36, and 57 is "Already".

Further, the title information output unit 82 compiles the title information (for example, "G, W Soccer Digest, Already reproduced") from the summary title "W Soccer Digest" and reproduction information ("Already").

In this manner, the title retrieving unit 81 and the title information output unit 82 compile the title information for all programs.

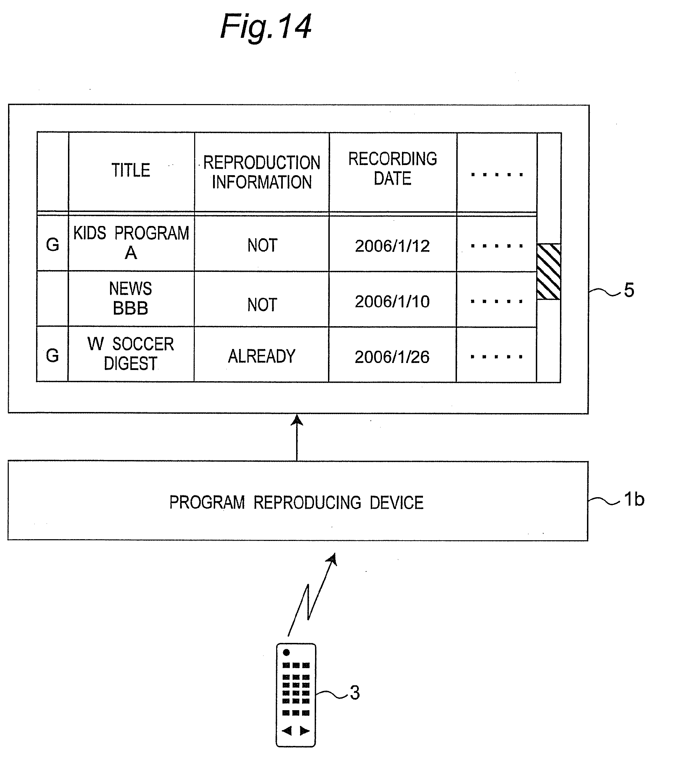

The title information output unit 82 outputs the compiled title information. An output example of title information is shown in Fig. 14. In Fig.14, the recording date is also outputted. In Fig. 14, "G" represents a summary title. Also in Fig. 14, the reproduction information "Already" in the summary tile shows that all programs corresponding to the summary titles have been already reproduced. In Fig. 14, "Not" in the reproduction information of summary title shows that at least one of programs is not reproduced out of the programs corresponding to the summary title (the reproduction information of all programs is not "Already").

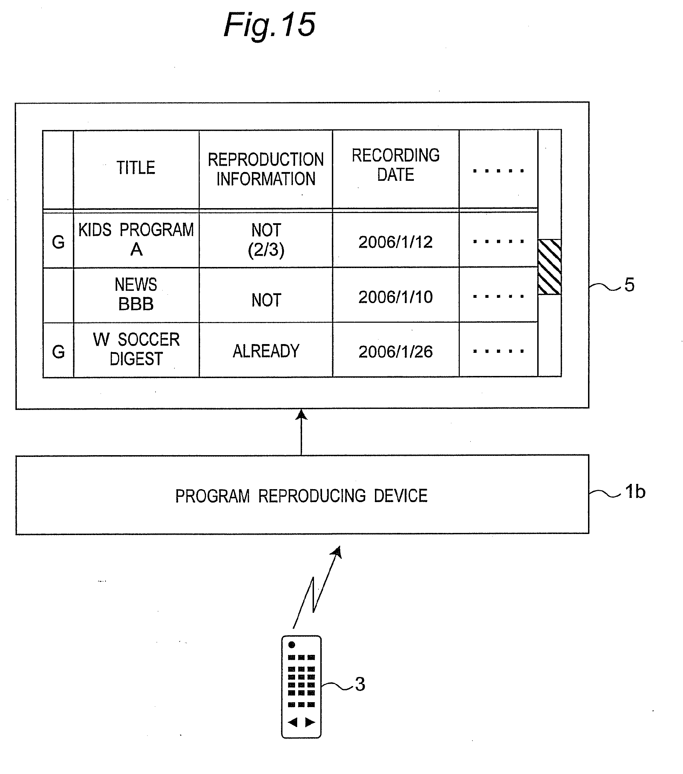

The title information output unit 82 reads out the reproduction information corresponding to two or more continuous titles provided with summary title flag from the program storage unit 11, and may acquire the information of the rate of "Not" and "Already" values of the reproduction information to the reproduction information being read out. In such a case, since the reproduction information "Not" is 1, and the reproduction information "Already" is 2, in the reproduction information of ID of 1, 3, and 17, the title information output unit 82 may specify the reproduction information of summary title as "Not, 2/3". Herein, "Not" shows that there is a program not-reproduced yet, and "2/3" shows that two out of three programs have been already reproduced. In this case, the title information output unit 82 displays the title information as shown in Fig. 15.

Thus, according to the preferred embodiment, in the summary title which is made by compiling program titles, information about Already reproduced or Not reproduced may be preferably managed and outputted.

In the preferred embodiment, the algorithm for judging whether one program is reproduced or not is preferably realized by the algorithm explained in embodiment 1, but may also be judged by the conventional algorithm. For example, a conventional algorithm may be applied, in which whether reproduced for 1 minute or reproduced completely, "Not reproduced" is not displayed.

The software for realizing the information processing apparatus in the preferred embodiment may be realized by the following program. This program causes the computer to execute the following steps:
- a step of storing, in a program storage unit, program data having an attribute value including program title and reproduction information showing whether the program has been already reproduced or not,
- a receiving step of receiving a title output instruction for issuing the program title,
- a title retrieving step of judging whether plural titles satisfy a specified condition or not when a title output instruction is received at the receiving step, composing a summary title as one title relating to the plural titles satisfying the specified condition, and acquiring a title not satisfying the specified condition, and
- a title information output step of issuing title information including the title acquired at the title retrieving step, and the reproduction information of the program corresponding to the acquired title, acquiring reproduction information of plural programs corresponding to the summary title, determining the reproduction information corresponding to the summary title by using the reproduction information of plural programs, and issuing the title information including the summary title and the determined reproduction information.

In this program, the title information output step outputs title information having the title retrieved at the title retrieving step and reproduction information of a program corresponding to the title, and may set the reproduction information corresponding to the summary title to the value showing already-reproduced state only when all pieces of the reproduction information of plural programs corresponding to the summary title shows already-reproduced state.

Also in this program, the title information output step outputs title information including the title retrieved at the title retrieving step and reproduction information of the program corresponding to the title, and may set the reproduction information corresponding to the summary title to the value showing not-reproduced state when at least one piece of information shows not-reproduced state out of reproduction information of plural programs corresponding to the summary title.

In the program, the title information output step may output the rate of number of programs having reproduction information showing already-reproduced state, out of the total number, for the plural programs relating to the summary title, in a visually recognizable manner, as the reproduction information corresponding to the summary title.

The program may cause a computer to execute further:
- a reproducing step of reproducing the program data to which reproduction is instructed at the receiving step,
- a reproduction judging step of judging whether equal to or more than a specified rate of the program data has been already reproduced or not at the reproducing step, for the program data stored in the program storage unit, and
- a reproduction information setting step of setting reproduction information showing whether the program data has been already reproduced or not, according to the judging result at the reproduction judging step.

The program may also cause a computer to execute a recording step of recording a program. The program is a program recorded at the recording step.

In the program, the recording judging step may judge whether or not the program is reproduced for the time equal to or more than a specified rate to the total reproduction time.

In these preferred embodiments, each process (each function) may be realized by centralized processing of one device (system), or dispersed and processed by plural devices.

The computer for executing the program may be one or a plurality. That is, it may be realized by centralized process or disperse process.

The invention is not limited to the illustrated embodiments alone, but may be changed and modified in various forms, which are also included in the scope of the invention.

### Industrial Applicability

As described above, the invention is capable of managing whether the program is reproduced or not in an easy method, and is capable of managing in a manner suited to the sense of the user, and is hence very useful for the program reproducing device and the like.

## Claims

1. A program reproducing device comprising:
a program storage unit that stores program data;
a receiving unit that receives a reproduction instruction of program data stored in the program storage unit;
a reproducing unit that reproduces the program data to which reproduction is instructed through the receiving unit;
a reproduction completion judging unit that judges whether a specified rate of the program data or more has been already reproduced or not by the reproducing unit, for the program data stored in the program storage unit; and
a reproduction information setting unit that sets reproduction information showing whether the program data has been already reproduced or not, according to the judging result of the reproduction completion judging unit.

2. The program reproducing device according to claim 1, further comprises:
a title information retrieving unit that retrieves title information including a title of program data and reproduction information related to the program data from the program storage unit when the receiving unit receives an output instruction of program title; and
a title information output unit that outputs the title information retrieved by the title information retrieving unit.

3. A program reproducing device comprising:
a program storage unit that stores program data having an attribute value including a title of program and reproduction information showing whether the program has been already reproduced or not;
a receiving unit that receives a title output instruction for issuing the program title;
a title retrieving unit that judges whether plural titles satisfy a specified condition or not when the receiving unit receives the title output instruction, composes a summary title as one title relating to the plural titles satisfying the specified condition, and acquires a title not satisfying the specified condition; and
a title information output unit that outputs title information including the title acquired by the title retrieving unit and the reproduction information of the program corresponding to the acquired title, acquires reproduction information of plural programs corresponding to the summary title, determines the reproduction information corresponding to the summary title by using the reproduction information of plural programs, and outputs the title information including the summary title and the determined reproduction information.

4. The program reproducing device according to claim 3, wherein the title information output unit outputs title information having the title retrieved by the title retrieving unit and reproduction information corresponding to the title, and sets the reproduction information corresponding to the summary title to the value showing already-reproduced state only when all pieces of the reproduction information of plural programs corresponding to the summary title shows already-reproduced state.

5. The program reproducing device according to claim 3, wherein the title information output unit outputs title information including the title retrieved by the title retrieving unit and reproduction information of the program corresponding to the title, and sets the reproduction information corresponding to the summary title to the value showing not-reproduced state when at least one piece of information shows not-reproduced state out of reproduction information of plural programs corresponding to the summary title.

6. The program reproducing device according to claim 3, wherein the title information output unit outputs a rate of number of programs having reproduction information showing already-reproduced state, to the total number, for the plural programs relating to the summary title, in a visually recognizable manner, as the reproduction information corresponding to the summary title.

7. The program reproducing device according to claim 3, further comprising:
a reproducing unit that reproduces the program data to which reproduction is instructed through the receiving unit;
a reproduction completion judging unit that judges whether a specified rate of the program data or more has been already reproduced or not by the reproducing unit, for the program data stored in the program storage unit; and
a reproduction information setting unit that sets reproduction information showing whether the program data has been already reproduced or not, according to the judging result of the reproduction completion judging unit.

8. The program reproducing device according to claim 1 or 3, further comprising:
a recording unit that records programs,
wherein the program storage unit stores the program recorded by the recording unit.

9. The program reproducing device according to claim 1 or 7, wherein the reproduction completion judging unit judges whether a rate of the time of the program actually reproduced to total reproduction time of the program is equal to or more than a specified value .

10. The program reproducing device according to claim 8, wherein the specified value is 50% or more to less than 100%.

11. A program for causing a computer to execute:
a receiving step of receiving a reproduction instruction of program data stored in a program storage unit;
a reproducing step of reproducing the program data to which reproduction is instructed through the receiving step;
a reproduction judging step of judging whether a specified rate of the program data or more has been already reproduced or not at the reproducing step, for the program data stored in the program storage unit; and
a reproduction information setting step of setting reproduction information showing whether the program data has been already reproduced or not, according to the judging result at the reproduction judging step.

12. The program according to claim 11 for causing a computer to execute further:
a title information retrieving step of retrieving title information including the title of the program data and reproduction information related to the program data from the program storage unit when the receiving step receives an output instruction of program title, and
a title information output step of issuing the title information retrieved at the title information retrieving unit.

13. A program for causing a computer to execute:
a step of storing, in a program storage unit, program data having an attribute value including a title of program and reproduction information showing whether the program has been already reproduced or not;
a receiving step of receiving a title output instruction for issuing the program title;
a title retrieving step of judging whether plural titles satisfy a specified condition or not when the receiving step receives the title output instruction, composing a summary title as one title relating to the plural titles satisfying the specified condition, and acquiring a title not satisfying the specified condition; and
a title information output step of issuing title information including the title acquired at the title retrieving step and the reproduction information of the program corresponding to the acquired title, acquiring reproduction information of plural programs corresponding to the summary title, determining the reproduction information corresponding to the summary title by using the reproduction information of plural programs, and issuing the title information including the summary title and the determined reproduction information.

14. The program according to claim 13, wherein the title information output step outputs title information having the title retrieved at the title retrieving step and reproduction information of program corresponding to the title, and sets the reproduction information corresponding to the summary title to the value showing already-reproduced state only when all pieces of the reproduction information of plural programs corresponding to the summary title shows already-reproduced state.

15. The program according to claim 13, wherein the title information output step outputs title information including the title retrieved at the title retrieving step and reproduction information of the program corresponding to the title, and sets the reproduction information corresponding to the summary title to the value showing not-reproduced state when at least one piece of information shows not-reproduced state out of reproduction information of plural programs corresponding to the summary title.

16. The program according to claim 13, wherein the title information output step outputs a rate of number of programs having reproduction information showing already-reproduced state, out of the total number, for the plural programs relating to the summary title, in a visually recognizable manner, as the reproduction information corresponding to the summary title.

17. The program according to claim 13 for causing a computer to execute further:
a reproducing step of reproducing the program data to which reproduction is instructed at the receiving step;
a reproduction judging step of judging whether a specified rate of the program data or more has been already reproduced or not at the reproducing step, for the program data stored in the program storage unit; and
a reproduction information setting step of setting reproduction information showing whether the program data has been already reproduced or not, according to the judging result at the reproduction judging step.
